# EUROPÄISCHE PATENTSCHRIFT

(11) **EP 0 781 530 B1**
(45) Veröffentlichungstag und Bekanntmachung des Hinweises auf die Patenterteilung: **01.09.2004**
(21) Anmeldenummer: 96120356.9
(22) Anmeldetag: 18.12.1996
(51) Int. Cl.: A61C 5/10, A61C 13/00, A61C 13/003

(54) **Verfahren zur Herstellung von Zahnkronen und/oder Zahnbrücken**
Method for manufacturing tooth crowns and/or dental bridges
Méthode de fabrication de couronnes dentaires et/ou de ponts dentaires

(30) Priorität: 19.12.1995 CH 357595
(43) Veröffentlichungstag der Anmeldung: 02.07.1997
(73) Patentinhaber: Ivoclar Vivadent AG, 9494 Schaan (LI)
(72) Erfinder: Wohlwend, Arnold, 8055 Zürich (CH)
(74) Vertreter: Splanemann Reitzner Baronetzky Westendorp Patentanwälte

(56) Entgegenhaltungen:
- EP-A- 0 375 647
- EP-A- 0 389 461
- DE-A- 4 202 215
- US-A- 4 609 350
- US-A- 4 744 757
- US-A- 5 186 626

## Beschreibung

Die Erfindung betrifft ein Verfahren zur Herstellung von Zahnkronen und/oder Zahnbrücken, gemäß dem Oberbegriff von Anspruch 1.

Ein derartiges Verfahren ist auf der DE-OS 36 05 437 bekannt. Diese Druckschrift lehrt, mechanisch hoch beanspruchte Teile aus Dentalgusswerkstoffen und übrige Bereiche aus keramischen Massen herzustellen. Gemäß dieser Druckschrift soll eine keramische Vollkrone nach der Art der Jacket-Kronen-Technik durch eine Krone mit Dentalgusswerkstoff, also mit Hilfe der Metall-Keramik-Technik ersetzt werden. Die Dentalgusswerkstoffe sollen dann keramisch verblendet werden, und es wird angestrebt, aufbrennfähige Dentalgusswerkstoffe zu verwenden, die einen auf diese Verblendkeramik abgestimmten Wärmeausdehnungskoeffizienten aufweisen sollen.

Das aus dieser Druckschrift bekannte Verfahren hat sich jedoch nicht durchgesetzt. Auch wenn die Abweichung zwischen dem Wärmeausdehnungskoeffizienten einer Verblendkeramik von beispielsweise 9.5 µm/m·°K und einem geeigneten Dentalgusswerkstoff angenähert wird, entstehen beim Aufsintern regelmäßig Spannungsrisse in der Dentalkeramik, die im Laufe der Zeit zum Abplatzen der Verblendkeramik führen können. Dies ist besonders kritisch, wenn dünne Verblendkeramiken beispielsweise 0.5-1 mm Wandstärke verwendet werden, da dann Spannungsrisse regelmäßig zur Schwächung der Keramik führen und ein Abplatzen verursachen können.

Um den Verlust an Zahn-Hartsubstanz möglichst gering zu halten, ist es bekannt geworden, ein Geschiebe aus Brückengliedern zu verwenden, die vor dem Aufsintern der Verblendkeramik gegeneinander schiebe- und gegebenenfalls auch drehbeweglich sind. Mit einem derartigen Geschiebe können Verbinder für den Anschluß an der Zahnhartsubstanz in an sich bekannter Weise klauenförmig gestaltet sein, so daß eine besonders gute Verankerung gewährleistet ist. Ein derartiges Geschiebe eignet sich auch für die Herstellung von Backenzahnbrücken über eine Zahnlücke von mehr als einem Backenzahn und kann andererseits auch im Frontzahnbereich eingesetzt werden. Ein Beispiel für eine Brücke mit größerer Spannweite ist aus der DE-GM 84 37 158 ersichtlich. Bei dieser Brücke ist das Geschiebe bevorzugt aus NEM- oder aus EM-Draht hergestellt.

Ferner ist aus der DE-OS 31 34 484 ein Geschiebe bekannt, das aus Brückengliedern aus einer Platin-Gold-Legierung bestehen soll. Es versteht sich, daß anstelledessen auch andere Dentalgusswerkstoffe in geeigneten Legierungen verwendet werden könnten.

Neben den bekannten ästhetischen Problemen aufgrund der schlechten Transmissionseigenschaften der Metallkeramik für Licht besteht bei derartigen Metallkeramik-Geschieben das Problem, daß mit fortschreitendem Lebensalter des Patienten regelmäßig das Zahnfleisch schrumpft, so daß die metallische Basis sichtbar wird.

Um auch bei einer dünnen Verblendkeramik der Metallkeramik einen transluzenten Charakter zu geben, ist es bekannt, die Metallstruktur mit einem sogenannten Opaker abzudecken. Damit besteht eine derartige Metallkeramik jedoch aus 3 Schichten mindest potentiell unterschiedlicher Wärmeausdehnungskoeffizienten, was die bekannten Probleme noch verschärft.

EP-A-0 389 461 offenbart ein Verfahren gemäβ dem Obergegriff von Anspruch 1.

Demgegenüber liegt der Erfindung die Aufgabe zugrunde, ein Verfahren gemäß dem Oberbegriff von Anspruch 1 zu schaffen, das auch langfristig ein ästhetisch befriedigendes Resultat insbesondere sowohl bei Frontzahnbrücken, aber auch bei langen Backenzahnbrücken ermöglicht.

Diese Aufgabe wird erfindungsgemäß durch Anspruch 1 gelöst. Vorteilhafte Weiterbildungen ergeben sich aus den Unteransprüchen.

Überraschend führt die erfindungsgemäße Maßnahme, ein keramisches Verstärkungselement als Armierung zu verwenden, zu der Beseitigung der vorstehend genannten Probleme der bekannten Lösungen: der Wärmeausdehnungsgradkoeffizient kann ziemlich genau entsprechend der verwendeten Keramikmasse eingestellt werden. Ein Schrumpfen des Zahnfleischs führt auch bei langen Brückenkonstruktionen nicht zum Sichtbarwerden unästhetisch wirkender Metallteile. Eine Opakisierungsschicht ist entbehrlich, so daß der Aufwand für die Herstellung reduziert ist.

Besonders günstig läßt sich das erfindungsgemäße keramische Verstärkungselement im Heisspressverfahren herstellen, wobei es sich versteht, daß nach einer entsprechenden Modellierung das Keramikmaterial, das beispielsweise aus Glas- oder Feldspatkeramik bestehen kann, auf das aus Zirkon- oder Aluminiumoxidkeramik bestehende Material des Verstärkungselement aufgesintert werden kann.

Ein weiterer besonderer Vorteil der erfindungsgemäßen Lösung ist die Möglichkeit, die Zahnsituation auf röntgenographischem Weg zu überwachen. Diese Möglichkeit ist besonders bei Überkronungen günstig. Das erfindungsgemäße Vollkeramiksystem erlaubt eine erhöhte Lichttransmission, ähnlich dem natürlichen Zahn, der aus einem Dentinkern entsprechend dem keramischen Verstärkungselement und dem Schmelzmantel entsprechend der aufgesinterten Keramikmasse besteht.

Der erfindungsgemäße Aufbau einer Krone oder einer Brücke ist demnach demjenigen eines natürlichen Zahnes angeglichen, so daß eine optimale Reproduktion möglich ist.

Erfindungsgemäß ist es besonders günstig, daß die ziemlich harten Verstärkungselemente vorgefertigt sein können, sei es, bereits in Form eines Geschiebes oder als Gerüst für Überkronungen. Damit ist es nicht erforderlich, daß das einzelne Zahnlabor oder gar der einzelne Zahnarzt teure CAD/CAM-Systeme anschafft, mit denen eine dreidimensionale Bearbeitung möglich ist.

Erfindungsgemäß ist lediglich eine eindimensionale, maximal eine zweidimensional Bearbeitung möglich, die auch gut mit einer pantographenähnlichen Vorrichtung erfolgen kann.

Gemäß der erfindungsgemäßen Ausgestaltung ist es vorgesehen, daß die Kraftübertragung der Kaukräften über die Zahnbrücken bzw. -kronen zu den Zahnstümpfen, insbesondere, was Zugkräfte anbelangt, nahezu ausschließlich über das erfindungsgemäße Verstärkungselement erfolgt.

Die keramische Masse dient lediglich der Druckübertragung von der Kaufläche auf das Verstärkungselement und wird insbesondere nicht auf Zug und Scherung belastet. Demententsprechend ist es unschädlich, daß sie eine geringe Biegefestigkeit von beispielsweise lediglich 200 bis 400 MPa hat, nachdem die als Armierung wirkende hochfeste Kermamik des Verstärkungselements eine Biegezugfestigkeit von beispielsweise 800 bis 1500 MPa, insbesondere etwa 1200 MPa aufweist. In diesem Zusammenhang ist es besonders günstig, daß die weichere Keramikmasse leichter bearbeitbar und an die erwünschten Formen leichter anpaßbar ist.

Erfindungsgemäß wirkt das Verstärkungselement auch als Armierung bei der Schleifbearbeitung. Auch bei äußerst dünnen Randbereichen wird aufgrund der aussteifenden Wirkung des Verstärkungselements die Neigung zur Rißbildung reduziert, so daß die Nachbearbeitung mittels Schleifen weniger kritisch ist.

Weitere Einzelheiten, Vorteile und Merkmale ergeben sich aus der nachfolgenden Beschreibung mehrerer Ausführungsbeispiele der Erfindung anhand der Zeichnung. Es zeigen:
- Fig. 1: eine schematische Ansicht eines vorbereitenden Schritts des erfindungsgemäßen Verfahrens unter schematischer Darstellung des Heißpressverfahrens in einem Muffelofen;
- Fig. 2: eine schematische Ansicht eines weiteren Schritts des Heißpressverfahrens in einem Muffelofen;
- Fig. 3: eine Darstellung eines Ausführungsbeispiels eines erfindungsgemäßen Verstärkungselementes unter Verwendung eines Geschiebes;
- Fig. 4: ein schematisierter Horizontalschnitt des Geschiebes gemäß Fig. 3;
- Fig. 5: eine weitere Ausführungsform eines erfindungsgemäßen Verstärkungselementes in seitlicher Ansicht;
- Fig. 6: eine Darstellung einer einem Pantographen entsprechenden Vorrichtung in Seitenansicht;
- Fig. 7: eine schematische Ansicht eines Pantographen zur Herstellung einer Vergrößerung in der Ansicht von oben;
- Fig. 8: eine modifizierte Ausführungsform der pantographenähnlichen Vorrichtung in schematischer Darstellung;
- Fig. 9: eine Seitenansicht eines gemäß dem erfindungsgemäßen Verfahren hergestellten Gerüstes, dessen Hohlraum mittels einer Feldspat- oder Glaskeramik aufgefüllt ist;
- Fig. 10: das in Fig. 9 dargestellte Gerüst, dessen Außenform mit Wachs aufmodelliert ist;
- Fig. 11: der Verfahrensschritt des Einbettens des Gerüsts gemäß Fig. 10 in einem Muffelofen zur Anwendung des Heißpressverfahrens;
- Fig. 12: eine Darstellung einer Ausführungsform eines erfindungsgemäßen Verstärkungselementes für den Backenzahnbereich, in der Ansicht von oben, von unten und von der Seite;
- Fig. 13: eine Darstellung eines Brückenglieds, das beschliffen wird, in der Ansicht von der Seite, von unten sowie von oben;
- Fig. 14: eine Darstellung des Gerüsts mit aufgepresster Keramik;
- Fig. 15: eine Darstellung des Gerüsts gemäß Fig. 14 mit aufgepresster oder in Pulverform aufgebrachter Verblendkeramik;
- Fig. 16: eine Ansicht von zwei Brückengliedern für den Frontzahnbereich von hinten;
- Fig. 17: eine Ansicht von zwei Brückengliedern für den Frontzahnbereich gemäß Fig. 16 von oben;
- Fig. 18: die in dem Frontzahnbereich eingesetzten Brückenglieder gemäß Fig. 16;
- Fig. 19: eine Ansicht einer gemäß dem erfindungsgemäßen Verfahren hergestellten Zahnbrücke für den Frontzahnbereich von Palatinal;
- Fig. 20: ein Schnitt durch einen Frontzahn mit der eingesetzten Zahnbrücke, entlang der Linie I - I aus Fig. 19;
- Fig. 21: eine Ansicht eines Verbinders von hinten, von oben und von der Seite, wobei der Verbinder erfindungsgemäß als keramisches Verstärkungselement ausgebildet ist;
- Fig. 22: der Verbinder gemäß Fig. 21, nachdem er zur Verblockung in zwei benachbarte Zähne eingesetzt ist; und
- Fig. 23: eine Darstellung eines erfindungsgemäßen Verstärkungselements in einer weiteren Ausführungsform.

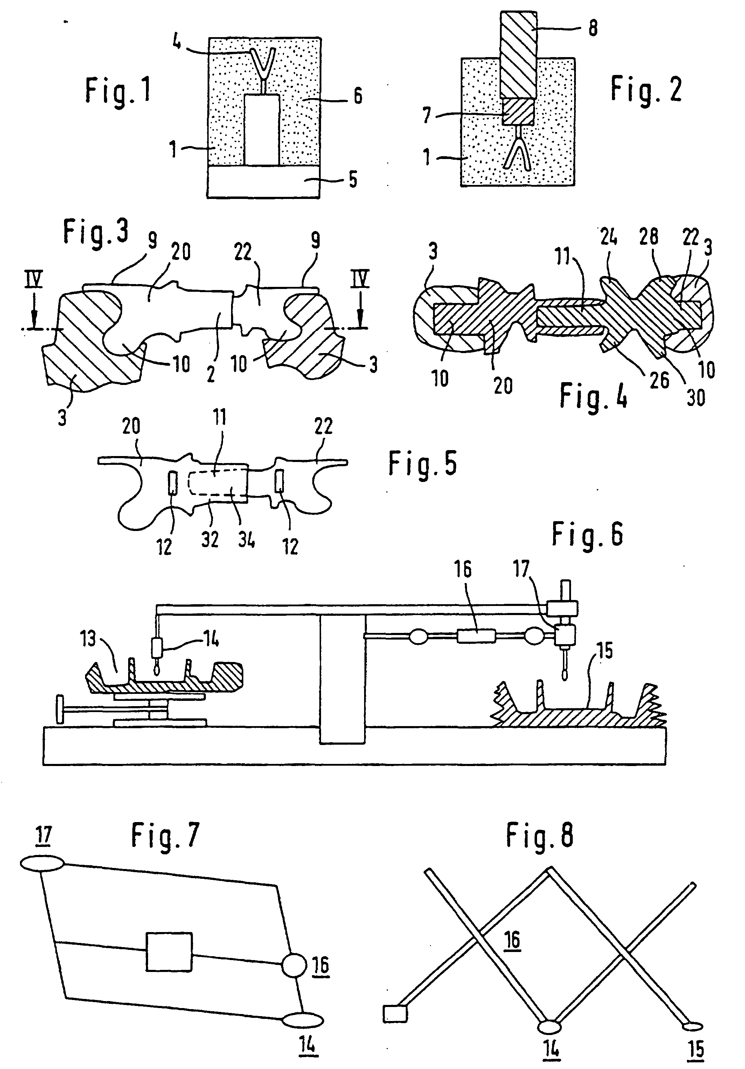

In Fig. 1 ist in schematisierter Form ein Muffelofen 1 zur Durchführung des IPS-Empress-Verfahrens der vorliegenden Anmelderin dargestellt, wobei zu Einzelheiten des Verfahrens auf die EP-A1-231 773 voll inhaltlich Bezug genommen wird.

Eine Dentinstruktur wird in Wachs auf einen speziellen Träger 5 aufgewachst und in einer Masse 6 eingebettet. Gemäß Fig. 2 wird ein Keramikrohling 7 über einen Aluminiumstöpsel 8 in einem Muffelofen, der auf ca. 800 °C erhitzt ist, eingebracht.

Es erfolgt ein Aufheizen auf ca. 1150°C, sodaß der Keramikrohling 7 fließfähig wird und die erwünschte Form der Krone oder Dentinstruktur annimmt. Über auf den Aluminiumstöpsel 8 aufgebrachten Druck wird er in die gewünschte Struktur geformt.

Wie aus Fig. 3 ersichtlich ist, ist erfindungsgemäß ein Verstärkungselement 2 als Armierung für die Herstellung einer in Fig. 3 nicht dargestellten Zahnkrone zwischen Zähnen 3 angeordnet. Das Verstärkungselement 2 besteht aus zwei Brückengliedern 20, 22, die über ein aus Fig. 5 besser ersichtliches Geschiebe 11 ineinandergreifen. Die Brückenglieder 20 und 22 laufen im wesentlichen in klauenförmigen Auflagern 9 aus, die einen formschlüssigen Eingriff in die Dentinmasse des Zahnes 3 erlauben. Aufgrund des Formschlusses und des unteren, ballenförmigen Vorsprungs 10 des Verstärkungselementes 2 ist die Zahnkrone sicher auch zugfest mit den Zähnen 3 verbunden.

Das erfindungsgemäße Verstärkungselement 2 besteht aus einer tetragonal stabilisierten Zirkonoxidkeramik mit Festigkeitswerten von 900 bis 1200 MPa, die mit 5 % Yttriumoxid vermischt ist. Die Brückenglieder 20, 22 können auch bevorzugt industriell vorgefertigt und in der vorliegenden Ausführungsform bereits fertig gesintert sein.

Die Ausgestaltung der Brückenglieder mit dem Geschiebe 11 erlaubt eine besonders günstige Krafteinleitung für die Übertragung der Kraft von der Kaufläche des Zwischengliedes, das über das Geschiebe 11 gebildet wird, auf die Nachbarzähne.

In Fig. 4 ist das erfindungsgemäße Verstärkungselement 3 im Horizontalschnitt entlang der Linie auf IV - IV dargestellt. Es ist ersichtlich, daß die Brückenglieder 20, 22 jeweils der Zahnform angepasste Vorsprünge 24, 26, 28 und 30 aufweisen, wobei die Vorsprünge 24 und 26 der Außenform des später zu modelierenden Zwischenzahns und die Vorsprünge 28 und 30 der Außenform des Nachbarzahns 3 angeglichen sind. Entsprechendes gilt für die Vorsprünge des Brückenglieds 20.

Aus Fig. 5 ist ersichtlich, daß ein Geschiebe 11 in der vorliegenden Darstellung mit zwei Haltestäben 12 versehen sein kann, die beim Verpressen verhindern, daß sich das Geschiebe 11 zusammenschiebt. Das Geschiebe 11 besteht aus einer Buchse 32 und einem Zapfen 34, die in an sich bekannter Weise ineinandergreifen, und ein Haltestab 12 ist an jedem der beiden Brückenglieder 20 und 22 angebracht.

Bevorzugt ist ein Spalt oder eine Ausnehmung in dem Zwischenraum zwischen Buchse und Zapfen 32 und 34 vorgesehen. Hierdurch wird erreicht, daß sich der Zwischenraum beim Heißpressverfahren mit der umgebenden Keramik füllen kann, so daß die Geschiebeverbindung ausgesteift wird.

Während die Herstellung einer Zahnbrücke gemäß den Figuren 1 bis 5 besonders für Zahnbrücken geeignet ist, die einen Zwischenzahn überspannen sollen, ist es auch möglich, Zahnbrücken erfindungsgemäß herzustellen, die mit keramischen Verstärkungselementen ausgerüstet sind und sich über eine erheblich größere Spannweite erstrecken. Im Extremfall können die so erfindungsgemäß hergestellten Brücken sich über den ganzen Kiefer erstrecken.

Hierzu ist es bevorzugt, mit zwischengesinterten Verstärkungselementen zu arbeiten. Durch das Zwischensintern ist jedoch eine Herstellung der zwischengesinterten Teile in vergrößertem Zustand möglich, wozu eine in Fig. 6 bis 8 dargestellte, pantographenähnliche Vorrichtung verwendbarer ist.

Erfindungsgemäß ist es in diesem Zusammenhang besonders günstig, daß lediglich eine eindimensionale, höchstens zweidimensionale Bearbeitung erforderlich ist. In Fig. 6 ist hierzu eine aus dem Mund des Patienten abgeformte Schablone 13 des geschliffenen Zahnes auf einem Auflager fest montiert. Ein Konturenfühler 14 fährt den Innenbereich der Schablone entlang, und über einen aus Fig. 7 und 8 besser ersichtlichen Pantographen wird die Bewegung des Fühlers 14 in vergrößertem Maßstab auf einen Fräser 17 übertragen, wobei die Maßstabsvergrößerung über ein Stellglied 16 einstellbar ist. Ein Keramikblock 15 wird entsprechend der erwünschten Form ausgefräst, wobei der Vergrößerungsmaßstab beispielsweise 10 - 30 Prozent betragen kann.

Die Vergrößerung kann in an sich bekannter Weise über entsprechend ausgebildete Gestänge erfolgen, wie sie in den Figuren 7 und 8 dargestellt sind.

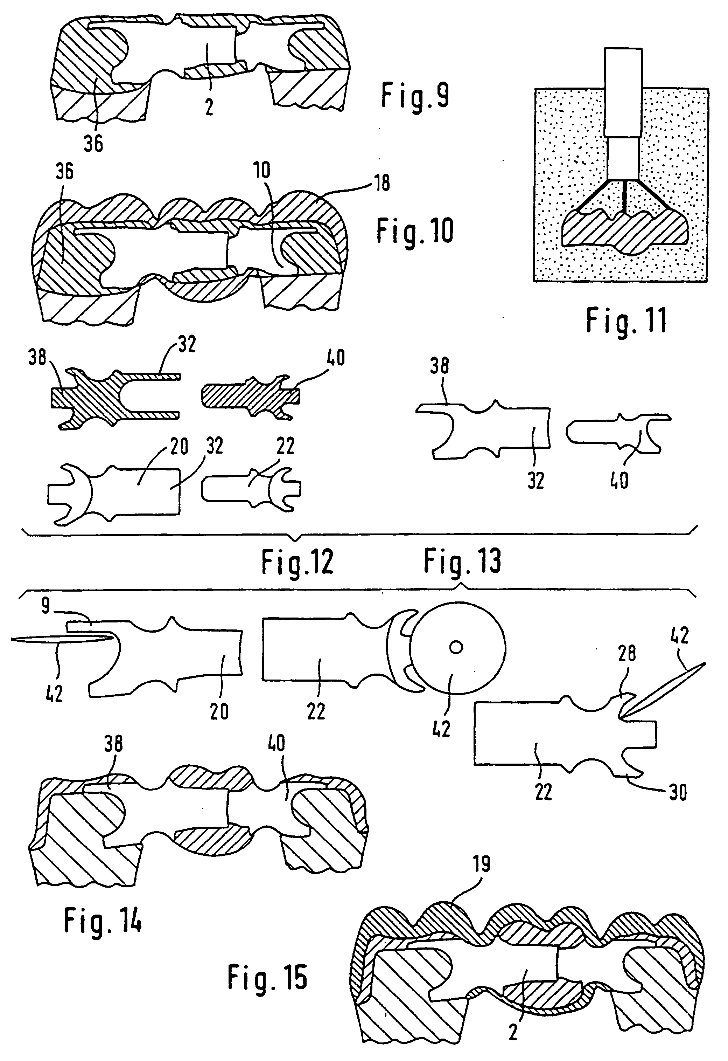

Die so hergestellten Teile müssen nachträglich fertiggesintert werden. In Fig. 9 ist hierzu der Einfachheit halber ein Verstärkungselement für eine lediglich einen Zwischenzahn überbrückende Zahnbrücke dargestellt, wobei es sich versteht, daß diese Ausgestaltung besonders bei größeren Brücken eingesetzt werden kann.

Es erfolgt eine Modulation der Außenform des erstellten Gerüstes in Wachs 36, und die Außenform mit dem anmodulierten Wachs wird dann in eine feuerfeste Masse eingebettet und in einem Ofen auf 900 °C erhitzt. Hierdurch brennt das Wachs aus, so daß ein Hohlraum entsteht.

Der Hohlraum wird durch die Heißpresstechnik über eine Feldspat- oder Glaskeramik gefüllt. Bevorzugt können bei dieser Ausgestaltung der Feldspat- oder Glaskeramik etwa 20 % Oxid-, Zirkonoxidpartikel beigemischt sein, wobei je nach Anforderung der Oxidanteil auch auf bis zu 80 % erhöht werden kann.

Diese Masse ist bereits hinsichtlich der Farbe und Transluzenz auf das natürliche Zahndentin abgestimmt. Die Presstemperatur des Heißpressverfahrens ist abhängig von dem Anteil der Oxidpartikel und kann zwischen 1000 und 1300 Grad liegen. Die Festigkeit der aufgebrannten Masse hängt ebenfalls von dem Anteil der Oxidpartikel und der gewünschten Transluzenz der Gerüstkeramik ab und liegt zwischen 200 und 500 MPa.

Besonders günstig bei dieser erfindungsgemäßen Heißpresstechnik ist es, daß sich jegliche Unterschnitte oder auch die beiden Brückenglieder, die ein Geschiebe bilden, präzise miteinander verbinden lassen.

Um die Zahnkrone fertigzustellen, kann in an sich bekannter Weise eine Verblendkeramik über die bekannte Pinseltechnik aufgeschichtet werden. Diese Technik ist jedoch vergleichsweise zeitaufwendig.

Zeitlich effektivere und ästhetisch gelungenere Resultate sind zu erreichen, wenn die Außenform gemäß Fig. 10 in Wachsmasse 18 modelliert wird und über das Heißpressverfahren gemäß Fig. 11 eingebettet und über die entstehenden Hohlräume die Verblendkeramik aufgepresst wird. Wenn die Rohlinge nicht bereits dentinfarben eingefärbt sind, ist es günstig, wenn farbliche Charakterisierungen auf das Gerüst gemäß Fig. 9 aufgebracht werden, das der Dentinmasse der ausgewählten Zahnfarbe bereits entspricht.

Die Presstemperatur der für das Heißpressverfahren gemäß Fig. 11 liegt in einem Bereich deutlich unterhalb der Presstemperatur für das Aufpressen der Gerüstkeramik gemäß Fig. 9, beispielsweise 100 bis 300 °C unterhalb dieser Temperatur. Hierdurch ist sichergestellt, daß sich das Gerüst nicht verformt. Es versteht sich, daß die Verblendkeramik noch weicher als die Gerüstkeramik sein kann, nachdem sie keine Zirkonoxidpartikel aufweist. Hinsichtlich der Farbgebung und Transluzenz steht hier die ganze Palette der farblichen Möglichkeiten zur Verfügung, so daß auch dem natürlichen Zahnschmelz entsprechende, weißlich-transluzente Verblendungen möglich sind.

Es versteht sich, daß der Wärmeausdehnungskoeffizient der Keramiken einander entspricht, wobei durch die Verwendung der zusätzlichen Gerüstkeramik in der hier beschriebenen Ausführungsform bei etwaigen Abweichungen des Wärmeausdehnungskoeffizienten zwischen der Armierung und der Verblendkeramik die an den Flächen sich ergebenden Unterschiede reduziert, nachdem die Gerüstkeramik bevorzugt mit Oxidpartikeln, also dem Materialverstärkungselement, versehen ist. Bei einem Oxidanteil von 80 % ist der Wärmeausdehnungskoeffizient nahezu identisch mit dem Wärmeausdehnungskoeffizient des Verstärkungselementes.

Gemäß einem modifizierten, vereinfachten Verfahren ist es vorgesehen, die Verblendkeramik unmittelbar auf das Verstärkungselement aufzubringen. Überraschend ergeben sich auch bei dieser Ausführungsform günstige und spannungsrißfreie Zahnbrücken, wobei dieses Verfahren besonders bei kürzeren Zahnbrücken und Zahnkronen eingesetzt werden sollte.

Gemäß einer im weiteren modifizierten Ausgestaltung ist für die Keramik des Verstärkungselementes eine Siliziumnitridoder Bornitridkeramik vorgesehen. Es versteht sich, daß eine Verblendkeramik dann bevorzugt einen zu dieser Keramik passenden Wärmeausdehnungskoeffizienten aufweist.

Wenn auch die gemäß Fig. 5 vorgesehenen Ausnehmungen das Eindringen der Gerüst- oder Verblendkeramik ermöglichen, ist es bevorzugt, die obere und untere Fläche des Geschiebes bereits aus Stabilitätsgründen geschlossen zu halten. Über die je verbindende Keramik wirken diese Flächen als Zug- und Druckelement nach der Art der Spannungsverteilung eines tragenden Balkens und sollten nicht geschwächt werden.

In Fig. 11 ist die Ausgestaltung der Verbinder oder Retentionsteile 38, 40 der Brückenglieder 20, 22 des Verstärkungselementes 2 dargestellt. Diese Verbinder sind besonders für Backenzähne geeignet. Bei dieser Ausgestaltung ist die Buchse 32 oben offen und unten und von der Seite geschlossen, so daß sie einen im Querschnitt U-förmigen Aufbau hat. Es versteht sich, daß die Ausrichtung des U auch umgekehrt werden kann, wenn dies aufgrund zahntechnischer Gegebenheiten erwünscht ist.

In Fig. 13 ist das Brückenglied 20 in der Seitenansicht links dargestellt, wobei die Gestaltung der Retentionsteile so erfolgt, daß mit einer gesinterten Diamantscheibe jede Stelle geschliffen werden kann, so daß keine weiteren Bohrinstrumente verwendet werden müssen. Das Aufpassen eines Retentionsteils ist in einer sehr kurzen Zeitspanne von beispielsweise weniger als 5 Minuten möglich. In Fig. 13 in der Mitte ist dargestellt, wie die Schleifscheibe 42 sich von unten in den Retentionsteil 40 erstreckt, und in Fig. 13 im rechten Teil ist das Brückenglied 22 in der Ansicht von oben dargestellt, wobei die Vorsprünge 28 und 30 sich nach der Art von Fingern seitlich nach außen erstrecken, so daß die Schleifscheibe 42 ohne weiteres in die Hohlräume eingreifen kann.

Fig. 14 zeigt eine modifizierte Ausgestaltung einer gemäß einem erfindungsgemäßen Verfahren hergestellten Zahnbrücke. Bei dieser Ausgestaltung wird das Gerüst über einen lichthärtenden Kunststoff ausmodelliert und in der zuvor beschriebenen Weise eingebettet und in einen Muffelofen eingebracht.

Über den Muffelofen werden die sich ergebenden Hohlräume mittels des Heißpressverfahrens mit einer Gerüstkeramik ausgefüllt, so daß die Gerüstkeramik sich auf dem Verstärkungselement erstreckt. Diese Keramik wird bevorzugt aus 20 bis 40 Gewichtsprozent Glas- oder Feldspatkeramik und 60 bis 80 Gewichtsprozent Zirkonoxidfüll-Partikel. Der Festigkeitswert einer derartigen Mischung liegt bei 300 bis 600 MPa.

Gemäß Fig. 15 wird das Gerüst abschließend mit Verblendkeramik 18 verblendet, wobei die Verblendung entweder in der zuvor beschriebenen Weise in Pulverform oder mittels Aufpressen erfolgen kann.

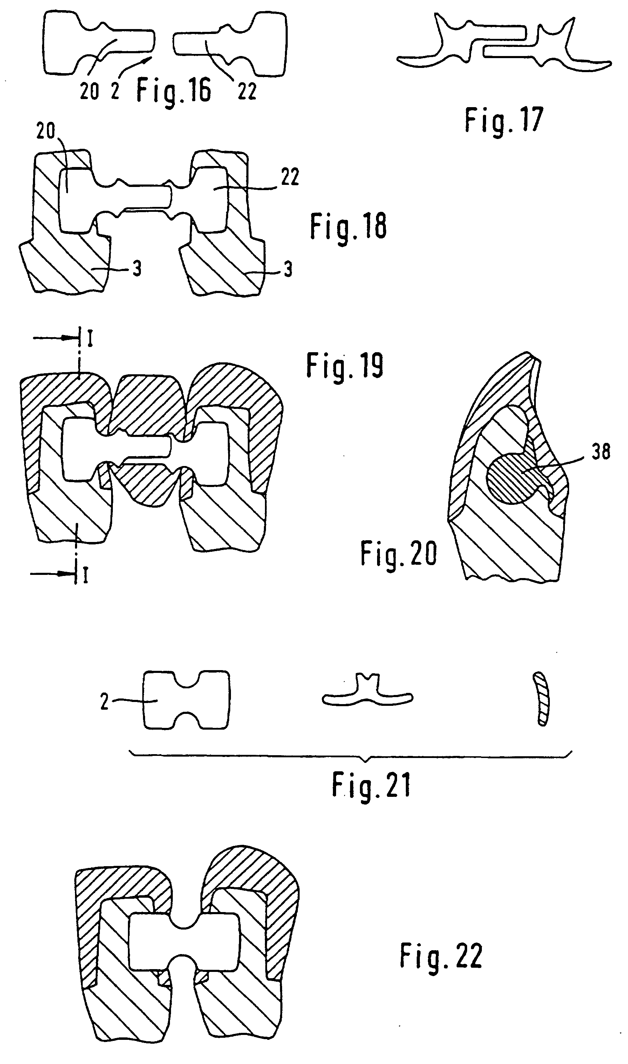

Fig. 16 zeigt zwei Brückenglieder 20 und 22 zur Bildung eines Verstärkungselementes für den Frontzahnbereich. Die Brückenglieder weisen - wie besser aus Fig. 17 ersichtlich - zwei einander überlappende Zapfen anstelle der Buchsen-/Zapfen-Kombination auf. Aus Fig. 18 ist ersichtlich, in welcher Weise das Gerüst die Zähne 3 zur Bildung eines Zwischenzahnes überspannen soll.

Aus Fig. 19 ist ersichtlich, wie Gerüstkeramik aufmodelliert werden kann, wobei bevorzugt das zuvor beschriebene Verfahren über lichthärtenden Kunststoff verwendet wird, der eingebettet und nach Heißpressen durch eine Gerüstkeramik ersetzt wird. Diese Gerüstkeramik besteht bevorzugt aus 70 bis 90 Gewichtsprozent einer Glas- oder Feldspatkeramik sowie aus 10 bis 30 Gewichtsprozenten von Zirkonoxid-Füllpartikeln. Die Festigkeitswerte einer derartigen Keramik liegen im Bereich von 200 MPa. Aufgrund der hohen Glas- und Feldspatanteile stehen alle wichtigen Farben zur Verfügung, und die Keramik kann die gleichen Lichtdurchlässigkeitswerte wie das natürliche Zahndentin oder der Zahnschmelz aufweisen, so daß eine optimale ästhetische Ausgestaltung gewährleistet ist.

Aus Fig. 20 ist ein Schnitt entlang der Linie I - I aus Fig. 19 ersichtlich. Es wird deutlich, daß die für den Frontzahnbereich verwendeten Verbinder oder Retentionsteile 38 sich stabil im Dentin erstrecken und die Verblendkeramik aufgrund der vergleichsweise großflächigen Verbindung mit der Verblendoder Gerüstkeramik eine sichere Verbindung erlaubt.

Fig. 21 zeigt eine Ausgestaltung eines Verbinders, der für die Herstellung über das erfindungsgemäße Verfahren geeignet ist. Ein derartiger Verbinder dient der Verblockung von zwei Zähnen ohne Zwischenglied, und aus Fig. 21 ist die Ausgestaltung in der Ansicht von hinten, von oben und im Querschnitt ersichtlich. Der Verbinder wirkt als Verstärkungselement 2 für die aus Fig. 22 ersichtliche Gerüstkeramik 18, die die zuvor beschriebenen Eigenschaften haben kann und entsprechend dem vorbeschriebenen Verfahren aufgebracht werden kann.

Fig. 23 zeigt eine weitere Ausführungsform eines erfindungsgemäßen Verstärkungselements, wobei das Geschiebe durch die beiden Brückenglieder 20, 22 und eine ringförmige Hülse gebildet wird, die die Zapfen der Brückenglieder umfaßt und schiebebeweglich lagert. Die Hülse ist bevorzugt derart gerundet, daß ihr Durchmesser in der Mitte am größten ist.

## Patentansprüche

1. Verfahren zur Herstellung von Zahnkronen und/oder Zahnbrücken, insbesondere mit mit einem Geschiebe verbundenen Brückengliedern, wobei Verbinder oder Retentionsteile auf mindestens einem Zahnstumpf befestigt und von einer keramischen Masse abgedeckt werden, wobei die Zahnkrone und/oder Zahnbrücke mit einem keramischen Verstärkungselement ausgebildet wird, und wobei das Verstärkungselement als zwischengesintertes Teil im Übermaß gefertigt wird, die für den Anschluss des Zahnstumpfes geeignete Form eingefräst wird und anschließend hieran, insbesondere mittels eines Heißpressverfahrens fertig gesintert wird,
**dadurch gekennzeichnet, dass** das keramische Verstärkungselement vorgefertigt ist und als Armierung wirkt, und dass auf das keramische Verstärkungselement eine Gerüstkeramik, insbesondere mit einem Anteil aus der Keramik des Verstärkungselements aufgebracht wird, und auf diese eine Verblendkeramik aufgebracht wird, wobei die Verblendkeramik, insbesondere aus Glas, zirkonhaltigem Glas oder Feldspat besteht.

2. Verfahren nach Anspruch 1,
**dadurch gekennzeichnet, dass** die Gerüstkeramik durch Heißpresstechnik auf das Verstärkungselement aufgebracht wird, wobei die Gerüstkeramik hinsichtlich der Farbe und Transluzenz vor dem Aufbringen abgestimmt wird.

3. Verfahren nach Anspruch 2,
**dadurch gekennzeichnet, dass** die Presstemperatur des Heißpressverfahrens, welche in Abhängigkeit von dem Anteil von Oxidpartikel in der Gerüstkeramik steht, vorzugsweise in einem Bereich von 1000°C bis 1300°C gewählt wird.

4. Verfahren nach einem der Ansprüche 2 oder 3,
**dadurch gekennzeichnet, dass** die Verblendkeramik auf die Gerüstkeramik mittels eines Heißpressverfahrens aufgebracht wird, wobei die Presstemperatur vorzugsweise 100° bis 300°C unterhalb der Presstemperatur, für das Aufpressen der Gerüstkeramik, liegt.

5. Verfahren nach einem der vorhergehenden Ansprüche,
**dadurch gekennzeichnet, dass** das zwischengesinterte Teil des Verstärkungselements mit einer einem Pantographen entsprechenden Vorrichtung vergrößert und hieran anschließend fertig gesintert wird.

6. Verfahren nach einem der vorhergehenden Ansprüche,
**dadurch gekennzeichnet, dass** das fertiggesinterte Teil des Verstärkungselements mittels einer dem Kopierschleifverfahren ähnlichen Vorrichtung, die die präparierten Teile des Zahnes auf der einen Seite im des Abdruck abgetastet und auf der anderen Seite das Fertigteil beschliffen wird.

7. Verfahren nach einem der vorhergehenden Ansprüche,
**dadurch gekennzeichnet, dass** der dem Zahnstumpf zugewandte Teil des Verbinders eine für das Beschleifen, insbesondere mittels einer Diamantscheibe, geeignete Form aufweist, und dass die Unterseite einer oberen Klaue des Verbinders als Auflager für den Zahnstumpf beschliffen wird.

8. Verfahren nach einem der vorhergehenden Ansprüche,
**dadurch gekennzeichnet, dass** die Auflager an den Zahnstümpfen mehrfingrig ausgebildet sind, wobei die Zwischenräume zwischen den Fingern für die Bearbeitung mit einer Schleifscheibe geeignet ausgebildet werden und sich insbesondere sternförmig erstrecken oder voneinander divergieren.

9. Verfahren nach einem der vorhergehenden Ansprüche,
**dadurch gekennzeichnet, dass** ein Retentionsteil mindestens eines Brükkengliedes mindestens ein Loch aufweist, das beim Heißpressverfahren ein Einfließen der umgebenden Keramik ermöglicht.

10. Verfahren nach einem der vorhergehenden Ansprüche,
**dadurch gekennzeichnet, dass** verschiedenfarbige Schmelzmassen in Rohlingform in dem Heißpressverfahren auf die Verstärkungselemente aufgebrannt und aufgepreßt werden.

11. Verfahren nach einem der vorhergehenden Ansprüche,
**dadurch gekennzeichnet, dass** die Verstärkungselemente zur Herstellung einer Brücke zwei Zahnstümpfe übergreifen und vollständig von Keramikmasse umgeben sind.

12. Verfahren nach einem der vorhergehenden Ansprüche,
**dadurch gekennzeichnet, dass** das Verstärkungselement aus Oxidkeramik, insbesondere aus mindestens 90% einer Zirkon- oder Aluminiumoxidkeramik oder Mischungen dieser ausgebildet wird und 0 bis 10% Yttriumoxid, Kalziumoxid oder Magtnesiumoxid oder Mischungen dieser aufweist.

13. Verfahren nach den vorhergehenden Ansprüchen,
**dadurch gekennzeichnet, dass** das Verstärkungselement umgebende Material weniger hart als das verstärkungselement ist und insbesondere mindestens teilweise aus Feldspatkeramik ausgebildet wird.

14. Verfahren nach einem der vorhergehenden Ansprüche,
**dadurch gekennzeichnet, dass**
das Geschiebe in seinem kraftübertragenden Bereich vollständig als Teil des Verstärkungselements ausgebildet ist.

15. Verfahren nach einem der vorhergehenden Ansprüche,
**dadurch gekennzeichnet, dass** das Verstärkungselement aus einer Keramik aus Silizium- oder Bohrnitrid oder aus einer anderen Keramik hergestellt wird, welche Beigefestigkeitswerte von mehr als 700 MPa erreichen.

16. Verfahren nach einem der vorhergehenden Ansprüche,
**dadurch gekennzeichnet, dass** die für die Verkleidung verwendete Verblendkeramik einen Wärmeausdehnungskoeffizient aufweist, welcher dem Wärmeausdehnungskoeffizient der Zirkonoxidkeramik für das Verstärkungselement entspricht.

17. Verfahren nach einem der vorhergehenden Ansprüche,
**dadurch gekennzeichnet, dass** die Verblendkeramik zu zwanzig bis vierzig Gewichtsprozent aus einer Glasoder Feldspaltkeramik und zu sechzig bis achtzig Gewichtsprozent aus Zirkonoxid besteht.

18. Verfahren nach einem der vorhergehenden Ansprüche,
**dadurch gekennzeichnet, dass** eine Backenzahnbrücke hergestellt wird und das Geschiebe eine an sich bekannte Ausgestaltung aus Zapfen und Hülsen aufweist.

19. Verfahren nach den Ansprüchen 1 bis 15,
**dadurch gekennzeichnet, dass** eine Frontzahnbrücke hergestellt wird und das Geschiebe aus zwei einander überlappenden und sich in einer Ebene nebeneinander erstreckenden Zapfen ausgebildet ist.

20. Verfahren nach einem der Ansprüche 1 bis 16,
**dadurch gekennzeichnet, dass** das Verstärkungselement als Verbinder zwischen einander benachbarten Zähnen ausgebildet ist, das in der Ansicht von hinten Befestigungsklappen und im Überbrückungsbereich zwischen den Zähnen eine Einschnürung aufweist.

21. Verfahren nach einem der vorhergehenden Ansprüche,
**dadurch gekennzeichnet, dass** zur Herstellung des Verstärkungselements das Gerüst mittels eines lichthärtenden Kunststoffes ausmodelliert und eingebettet wird und die Verblendkeramik mittels Heißpressen aufgepresst wird.

## Claims

1. A method of producing tooth crowns and/or teeth bridges, in particular with bridge members connected to an attachment, wherein connectors or retention members are secured on at least one tooth stump and are covered by a ceramic compound, wherein the tooth crown and/or bridge is formed with a ceramic reinforcing element, and wherein the reinforcing element is produced oversize as an intermediate sintered part, the mould suitable for the connection of the tooth stump is milled and subsequently thereto final sintering is effected in particular by means of a hot-pressing process,
**characterised in that** the ceramic reinforcing element is prefabricated and acts as a reinforcement, and **in that** a ceramic framework is applied to the ceramic reinforcing element, in particular with a portion of the ceramic of the reinforcing element, and a ceramic facing is applied thereto, wherein the ceramic facing consists in particular of glass, zircon-containing glass or feldspar.

2. A method according to Claim 1, **characterised in that** the ceramic framework is applied to the reinforcing element using a hot-pressing technique, wherein the ceramic framework is matched in respect of colour and translucency before application.

3. A method according to Claim 2, **characterised in that** the pressing temperature of the hot-pressing process, which is dependent on the proportion of oxide particles in the ceramic framework, is preferably chosen within a range of from 1000°C to 1300°C.

4. A method according to either Claim 2 or Claim 3,
**characterised in that** the ceramic facing is applied to the ceramic framework by means of a hot-pressing process, wherein the pressing temperature is preferably 100°to 300°C below the pressing temperature for the pressing-on of the ceramic framework.

5. A method according to any one of the preceding Claims,
**characterised in that** the intermediate sintered part of the reinforcing element is enlarged with an apparatus corresponding to a pantograph and subsequently thereto final sintering is effected.

6. A method according to any one of the preceding Claims,
**characterised in that** the finally sintered part of the reinforcing element is traced by means of an apparatus similar to the copy-grinding process, which apparatus traces the prepared parts of the tooth on one side in the impression and on the other side the finished part is ground.

7. A method according to any one of the preceding Claims,
**characterised in that** the part of the connector facing the tooth stump is of a shape suitable for grinding, in particular by means of a diamond disc, and **in that** the underside of an upper jaw of the connector is ground as a support for the tooth stump.

8. A method according to any one of the preceding Claims,
**characterised in that** the supports on the tooth stumps are designed to be multifingered, wherein the spaces between the fingers are designed for machining with a grinding wheel and, in particular, extend radially or diverge from one another.

9. A method according to any one of the preceding Claims,
**characterised in that** a retention part of at least one bridge member has at least one hole which during the hot-pressing process allows an inflow of the surrounding ceramic material.

10. A method according to any one of the preceding Claims,
**characterised in that** varicoloured melt compounds in blank form in the hot-pressing process are fired on and pressed on to the reinforcing elements.

11. A method according to any one of the preceding Claims,
**characterised in that** the reinforcing elements for producing a bridge overlap two tooth stumps and are completely surrounded by ceramic compound.

12. A method according to any one of the preceding Claims,
**characterised in that** the reinforcing element is formed from oxide ceramics, in particular from at least 90 % of zircon or aluminium oxide ceramics or mixtures thereof, and has 0 to 10 % yttrium oxide, calcium oxide or magnesium oxide or mixtures thereof.

13. A method according to any one of the preceding Claims,
**characterised in that** material surrounding the reinforcing element is less hard than the reinforcing element and in particular is formed at least partly from feldspar ceramics.

14. A method according to any one of the preceding Claims,
**characterised in that** in its force-transmitting zone the attachment is formed wholly as part of the reinforcing element.

15. A method according to any one of the preceding Claims,
**characterised in that** the reinforcing element is produced from a ceramic material consisting of silicon nitride or boron nitride, or from another ceramic material which attains strength values of more than 700 MPa.

16. A method according to any one of the preceding Claims,
**characterised in that** the ceramic facing used for the covering has a coefficient of thermal expansion which corresponds to the coefficient of thermal expansion of the zircon oxide ceramic for the reinforcing element.

17. A method according to any one of the preceding Claims,
**characterised in that** twenty to forty percent by weight of the ceramic facing consists of a glass or feldspar ceramic material and sixty to eighty percent by weight consists of zircon oxide.

18. A method according to any one of the preceding Claims,
**characterised in that** a molar bridge is produced and the attachment has a per se known configuration of pegs and sleeves.

19. A method according to Claims 1 to 15, **characterised in that** a front tooth bridge is produced and the attachment is formed from two mutually overlapping pegs extending side by side in one plane.

20. A method according to any one of Claims 1 to 16,
**characterised in that** the reinforcing element is formed as a connector between adjacent teeth, which viewed from behind has fastening flaps and a constriction in the bridging zone between the teeth.

21. A method according to any one of the preceding Claims,
**characterised in that** to produce the reinforcing element the framework is modelled and embedded by means a light-curing plastics material and the ceramic facing is pressed on by means of hot pressing.

## Revendications

1. Procédé de fabrication de couronnes dentaires et/ou de bridges dentaires, comprenant en particulier des éléments de bridge reliés par une fixation à glissière, les connexions ou les éléments de retenue étant fixés sur au moins un moignon et recouverts d'une masse céramique, dans lequel la couronne dentaire et/ou le bridge dentaire sont réalisés avec un élément de renforcement céramique, et l'élément de renforcement est réalisé sous forme d'élément pré fritté surdimensionné, que l'on fraise à la forme appropriée pour la fixation sur le moignon et que l'on finit ensuite de fritter, en particulier au moyen d'un procédé de compression à chaud,
**caractérisé en ce que** l'élément de renforcement céramique est préfabriqué et sert d'armature, et **en ce qu'**on dépose sur l'élément de renforcement céramique une céramique d'infrastructure, en particulier avec une partie provenant de la céramique de l'élément de renforcement, et que l'on dépose sur celle-ci une facette céramique, la facette céramique étant constituée en particulier de verre, de verre contenant du zirconium ou de feldspath.

2. Procédé selon la revendication 1, **caractérisé en ce que** l'on dépose la céramique d'infrastructure sur l'élément de renforcement au moyen d'un procédé de compression à chaud, dans lequel la céramique d'infrastructure est adaptée, avant le dépôt, pour ce qui est de la couleur et de la translucidité.

3. Procédé selon la revendication 2, **caractérisé en ce que** l'on choisit la température de compression du procédé de compression à chaud, laquelle dépend de la proportion de particules d'oxyde dans la céramique d'infrastructure, de préférence dans une gamme de 1000°C à 1300°C.

4. Procédé selon l'une quelconque des revendications 2 ou 3, **caractérisé en ce que** l'on dépose la facette céramique sur la céramique d'infrastructure au moyen d'un procédé de compression à chaud, la température de compression étant de préférence inférieure de 100°C à 300°C à la température de compression de la céramique d'infrastructure.

5. Procédé selon l'une quelconque des revendications précédentes, **caractérisé en ce que** l'on agrandit la partie pré frittée de l'élément de renforcement à l'aide d'un dispositif du type pantographe et que l'on finit ensuite le frittage.

6. Procédé selon l'une quelconque des revendications précédentes, **caractérisé en ce que** l'on meule la partie que l'on a entièrement frittée de l'élément de renforcement au moyen d'un dispositif similaire au meulage pour reproduction qui, d'une part, palpe les parties préparées de la dent au niveau de l'empreinte et, d'autre part, meule la partie finie.

7. Procédé selon l'une quelconque des revendications précédentes, **caractérisé en ce que** la partie de la connexion orientée vers le moignon présente une forme appropriée pour le meulage, réalisée en particulier au moyen d'un disque diamanté, et que la face inférieure d'un crochet supérieur de la connexion est meulée pour former un point d'appui sur le moignon.

8. Procédé selon l'une quelconque des revendications précédentes, **caractérisé en ce que** les points d'appui sur les moignons sont réalisés avec plusieurs éléments digitiformes, dans lequel les espaces entre les éléments digitiformes sont réalisés de manière appropriée pour la finition avec une meuleuse et s'étendent en particulier en étoile ou s'éloignent les uns des autres.

9. Procédé selon l'une quelconque des revendications précédentes, **caractérisé en ce qu'**un élément de retenue d'au moins un élément de bridge présente au moins une cavité qui permet un écoulement de la céramique avoisinante lors du procédé de compression à chaud.

10. Procédé selon l'une quelconque des revendications précédentes, **caractérisé en ce que** l'on cuit et on applique des masses fondues de couleurs différentes sous formes d'ébauche sur l'élément de renforcement lors du procédé de compression à chaud.

11. Procédé selon l'une quelconque des revendications précédentes, **caractérisé en ce que** pour la réalisation d'un bridge, les éléments de renforcement s'étendent sur deux moignons et sont totalement entourés par la masse céramique.

12. Procédé selon l'une quelconque des revendications précédentes, **caractérisé en ce que** l'élément de renforcement est constitué de céramique d'oxyde, en particulier d'au moins 90% d'une céramique d'oxyde de zirconium ou d'aluminium ou de mélanges de celles-ci et qu'il présente 0% à 10% d'oxyde d'yttrium, d'oxyde de calcium ou d'oxyde de magnésium ou des mélanges de ceux-ci.

13. Procédé selon l'une quelconque des revendications précédentes, **caractérisé en ce que** la matière entourant l'élément de renforcement est moins dure que l'élément de renforcement et en particulier qu'elle est constituée au moins en partie de céramique feldspathique.

14. Procédé selon l'une quelconque des revendications précédentes, **caractérisé en ce que** la fixation à glissière, dans sa zone de transmission de force, fait partie intégrante de l'élément de renforcement.

15. Procédé selon l'une quelconque des revendications précédentes, **caractérisé en ce que** l'élément de renforcement est formé à partir d'une céramique de nitrure de silicium ou de nitrure de bore ou d'une autre céramique, lesquelles atteignent des valeurs de résistance en flexion supérieures à 700 MPa.

16. Procédé selon l'une quelconque des revendications précédentes, **caractérisé en ce que** la facette céramique utilisée pour le revêtement présente un coefficient de dilation thermique, qui correspond au coefficient de dilation thermique de la céramique d'oxyde de zirconium pour l'élément de renforcement.

17. Procédé selon l'une quelconque des revendications précédentes, **caractérisé en ce que** la facette céramique est composée de vingt à quarante pour cent en poids d'une vitro-céramique ou d'une céramique feldspathique et de soixante à quatre-vingts pour cent en poids d'oxyde de zirconium.

18. Procédé selon l'une quelconque des revendications précédentes, **caractérisé en ce que** l'on fabrique un bridge pour molaires et que la fixation à glissière présente une structure connue en soi composée de tenons et de mortaises.

19. Procédé selon les revendications 1 à 15, **caractérisé en ce que** l'on fabrique un bridge pour incisives et que la fixation à glissière est formée par deux tenons se chevauchant et s'étendant l'un à côté de l'autre sur un même plan.

20. Procédé selon l'une quelconque des revendications 1 à 16, **caractérisé en ce que** l'élément de renforcement est réalisé sous forme de connexion entre dents adjacentes qui présente, vu de derrière, des pattes de fixation et un resserrement dans la zone de pontage entre les dents.

21. Procédé selon l'une quelconque des revendications précédentes, **caractérisé en ce que** l'infrastructure pour la fabrication de l'élément de renforcement est modelée et incorporée dans une matière plastique photodurcissable et que la facette céramique est appliquée par pression au moyen d'un procédé de compression à chaud.
